(19) Europäisches Patentamt
European Patent Office
Office européen des brevets

(11) EP 1 349 096 A1

(12) **EUROPEAN PATENT APPLICATION**

(43) Date of publication:
**01.10.2003 Bulletin 2003/40**

(51) Int Cl.[7]: **G06F 17/60**

(21) Application number: **03251787.2**

(22) Date of filing: **21.03.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **28.03.2002 GB 0207415**

(71) Applicant: **Vulkan, Nir**
**Summertown, Oxford OX2 7AZ (GB)**

(72) Inventor: **Vulkan, Nir**
**Summertown, Oxford OX2 7AZ (GB)**

(74) Representative: **Calderbank, Thomas Roger et al**
**MEWBURN ELLIS**
**York House**
**23 Kingsway**
**London WC2B 6HP (GB)**

(54) **Electronic communication and apparatus**

(57) In order to create market data containing information about cross-promotions, first

(a) a list of goals, representing various reasons why the user might select a product or service for cross promotion;
(b) a list of generic cross-promotions, representing various cross-promotion templates;
(c) a functional classification of the goods/services database;

are obtained. Then the following weighted links are defined between the information thus obtained:

(i) weighted links between generic cross-promotions and various classes in the functional classification representing the degree of correlation between a certain generic cross-promotion and a set of products, the links being positive or negative
(ii) weighted links between generic cross-promotions and various classes in the consumer target groups' classification representing the correlation between the generic cross-promotion and the target group it links;
(iii) weighted links between various classes in the functional classifications, representing the degree of match between these products in a cross promotion; and
(iv) weighted links between the goals and the generic cross-promotions, each goal corresponding to at least one generic cross-promotion, and when the goal corresponds to more than one generic cross-promotion, a weight $\omega \in (0,1)$ is placed on each of these correspondences representing the relative match between the goal and corresponding at least one generic cross-promotion.

Trading can then be carried out using the market data to generate a cross-promotion between selected products or services.

FIG. 3

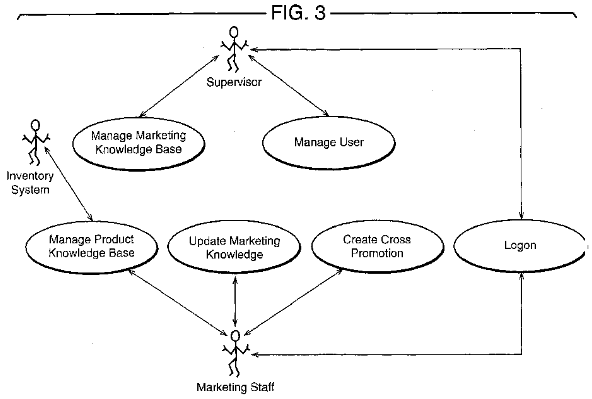


EP 1 349 096 A1

## Description

The present invention relates to a method and apparatus for creating virtual package deals using an electronic communication network.

A package deal or cross-promotion is the act of creating a joint sale of two or more goods and/or services under pre-specified conditions. For example, "buy this shirt and these pair of trousers for $X" or "buy this shirt and get these trousers half price" and so on. One of these goods may comprise of a discount voucher, entitling its owner for a fixed discount on a range of pre-specified goods or services. A virtual package deal is the act of creating a display of a package deal on an electronic communication network, like the Internet. That is, the package does not need to be physically created (e.g. jointly packaged). In fact, the items can be stored in different places and only matched when delivered to the paying consumer. Furthermore, the price - and more generally the conditions of joint sale - of a virtual package deal can be changed in real-time in response to changes in demand (e.g. the price can be increased if demand is higher than a previously specified number).

As the e-commerce phenomenon matures, the Internet is emerging as a popular medium for buying and selling goods and services. Internet retailing is still growing at a fast rate as more and more customers discovering the advantages of shopping on-line. By now it is practically impossible to find any seller in the developed word that does not have an on-line presence. It is estimated that 9-10% of total retail sales in the US is generated on-line. And although forecasts vary widely, all seems to agree that this figure will grow over the near future.

Within this space, on-line retailers struggle to offer consumers a unique shopping experience - one that is different from shopping in a physical store or using a mail-order catalogue - while at the same time differentiating themselves from direct price competition. This is proving a difficult task. On-line sellers report that the Internet is used for "considered" rather than "impulse" shopping: shoppers who know exactly what they want use to the Internet to find out the best deal. For example consumers shopping in the high street 'go shopping' while on-line buyers 'go shopping for a Sony TV Model 2001'. The Internet is used primarily by consumers who focus on prices, because of the easiness of doing comparison shopping (the advent of search agents, also known as Shopbots, or Infobots, like BargainFinder and DealFinder, makes price comparison particularly easy).

Economic theory shows clearly that if consumers are able to compare prices, and if retailers do not have means of differentiating their offerings, then prices will be derived down so that non of the retailers is able to make any positive profits (this result in known in economics as the "Bertrand paradox" after the French economist August Bertrand who first pointed it out). In the brick-and-mortar world, retailers are able to differentiate their offering through creating different shopping experiences for the customers. However, this is far more difficult in the world of on-line shopping.

The invention arises from a background of recent growth in consumer e-commerce. With new distribution channels available, consumers are becoming more informed, discerning and demanding, both with regards to value and quality. Retailers have an ongoing and increasing need to maintain volumes and margins, and to both increase sales of fast moving stock and to manage the clearance of their slow moving stock promptly and cost effectively.

The present invention may provide a way around the problems of the known arrangements. By offering shoppers virtual package deals, which are not available from their brick-and-mortar outlets retailers can increase the likelihood of "impulse" shopping. By pricing bundles instead of individual items, retailers are better able to differentiate themselves from competition (because other sellers are unlikely to be selling the exact same package), hence potentially increasing their profits without changing their existing pricing policies. Moreover, when used externally, the invention allows sellers to increase their offering by teaming-up with one another on an ad-hoc basis if and only if the circumstances are right for doing so.

The invention is intended for retailers. There are modes of using the invention. First, it can be used internally: That is by a single large seller, for example by a mail order company or a department store. Second the invention can be used externally, or between organisations, so that the items which constitute the cross promotions come from different sellers. The same apparatus may be used for both modes, although additional steps may be required is the invention is used externally.

More specifically, using the invention sellers can create package deals to achieve the following three goals: First, it allows sellers to price packages (i.e. to bundle price) rather than individual items, hence allowing wider range of pricing strategies. Second, to increase the likelihood of buyers purchasing on impulse (i.e. buying goods or services other than those originally sought after). Finally, it allows sellers to add value to buyers. Value is added either by increasing the likelihood per-buyer of him or her purchasing the package compared to the likelihood of purchasing each of the parts of the package separately, or by increasing the 'basket size' per consumer (in expected terms).

As its most general, the invention proposes a method of storing marking data centred around a multi-dimensional database, and weighted links connecting items and item-categories in this database. The invention may then be used in the following way: The user (be it a large organisation using it internally, or any seller using it externally) identifies to the system the item to be promoted and the reason for doing so (e.g. it is a new product, it is a slow moving stock, etc.) The invention then returns an ordered non-empty list of possible package deals, sorted according to the user's goal. That is the first package deal in the list will be the best, given the user's reason for selecting to cross promote the item.

Furthermore, the invention may provide a method of updating the marketing information based on pre-defined success criteria (i.e. if a certain cross-promotion has done better or worst than expected). The invention may also provide a method of updating of the terms and conditions of the cross promotion (e.g. its price) based on real-time sales data.

Finally, if the invention is used externally, then it may provide a method of selecting a partner for a cross promotion based on microeconomic theory of negotiations.

According to the present invention, there is provided a method of creating marketing data containing information specific to the creation of virtual cross promotions, the method comprising steps of:

obtaining

(a) a list of goals, representing various reasons why the user might select a product for cross promotion (possible reasons include "surplus", "slow moving stock", "new product to be promoted" and so on);
(b) a list of generic cross-promotions (from now on GCP), representing various cross-promotion templates (for example 'Buy 1 Get 1 Free', or 'Buy 1 Get 1 at ½ Price', or 'Buy A & B and Pay X' and so on);
(c) a functional classification of the goods/services database (e.g. 'item X belongs to the shirt class', and 'the shirt class belongs to the clothes class', and so on); and
(d) a classification of the goods/services database according to their target groups (e.g. 'item X belongs to the men-in-their-early-20s class', and so on); and

defining

(e) weighted links between GCPs and various classes in the functional classification representing the degree of correlation between a certain GCP and a set of products (based on consumers' response to such promotions), the links being positive or negative (indicating they do not go well together);
(f) weighted links between GCPs and various classes in the consumer target groups' classification representing the correlation between the GCP and the target group it links;
(g) weighted links between various classes in the functional classifications (including, possibly, links between a class and itself), representing the degree of match between these products in a cross promotion (based on how well consumers respond to such promotions); and
(h) weighted links between goals and GCPs, each goal corresponding to at least one GCP, and when the goal corresponds to more than one GCP, a weight $\omega \in (0,1)$ is placed on each of these correspondences representing the relative match between the goal and GCP.

The present invention may provide a way around the problems of the known arrangements. By offering shoppers virtual package deals, which are not available from their brick-and-mortar outlets retailers can increase the likelihood of "impulse" shopping. By pricing bundles instead of individual items, retailers are better able to differentiate themselves from competition (because other sellers are unlikely to be selling the exact same package), hence potentially increasing their profits without changing their existing pricing policies. Moreover, when used externally, the invention allows sellers to increase their offering by teaming-up with one another on an ad-hoc basis if and only if the circumstances are right for doing so.

The invention is intended for retailers. There are modes of using the invention. First, it can be used internally: That is by a single large seller, for example by a mail order company or a department store. Second the invention can be used externally, or between organisations, so that the items which constitute the cross promotions come from different sellers. The same apparatus may be used for both modes, although additional steps may be required is the invention is used externally.

More specifically, using the invention sellers can create package deals to achieve the following three goals: First, it allows sellers to price packages (i.e. to bundle price) rather than individual items, hence allowing wider range of pricing strategies. Second, to increase the likelihood of buyers purchasing on impulse (i.e. buying goods or services other than those originally sought after). Finally, it allows sellers to add value to buyers. Value is added either by increasing the likelihood per-buyer of him or her purchasing the package compared to the likelihood of purchasing each of the parts of the package separately, or by increasing the 'basket size' per consumer (in expected terms).

Furthermore, the invention may provide a method of updating the marketing information based on pre-defined success criteria (i.e. if a certain cross-promotion has done better or worst than expected). The invention may also provide a method of updating of the terms and conditions of the cross promotion (e.g. its price) based on real-time sales data.

Finally, if the invention is used externally, then it may provide a method of selecting a partner for a cross promotion based on microeconomic theory of negotiations.

The marketing data of the invention may preferably be used in a method of selecting cross-promotions based on a user's input, the input being a product (or service) from the marketing data, and a goal from the pre-defined set. The selection method may be based on the maximisation algorithm (algorithm 1) which selects the items to be included in the cross promotion, and the details of the promotion in such a way as to maximise the user's goals. Further specification of this algorithm is provided below.

The marketing data of the invention may also preferably be used in a method of updating the marketing information - i.e. updating weights on existing links - based on pre-defined success criteria. For example, if a certain cross-promotion has done better than expected the system increases the weights of the relevant links. The updating algorithm (algorithm 2) is further explained below.

Preferably, the virtual cross-promotion selected by the method of selecting a cross-promotion may be updated based on real-time sales information and inventory. This updating algorithm (algorithm 3) is further explained below.

Preferably the invention is used to create cross-promotions across organisations, whereby there is also provided a method for selecting a partner for cross promotion based on "market power". This method is explained in algorithm 4, which is specified below.

The present invention may thus provide an original method of classifying and updating relevant marketing information supporting the creation of successful package deals, and a number of related algorithms to achieve this goal. This allows an automation of this process, which is both more efficient and accurate. As we now explain, it allows sellers to create and maintain cross promotions, which otherwise would have been too costly or complex to carry out.

Cross-promotion is a relatively complex form of marketing. There are many things that need to be considered for each package: How good is the fit between the target customers? How good is the fit between the products? How good is the fit between the type of products and the type of the cross promotion selected? A manufacturer or top brand retailer would also want to consider the medium and long term effects of the cross promotion. For example, in what way will it affect its degree of product differentiation? A badly designed cross promotion could for example increase sales temporarily but end up damaging the long term exclusiveness of a brand name, causing more harm than good. On the other hand, a well-designed cross promotion can actually increase the perceived desirability of a certain brand without actually costing anything to the participating seller. Physical limitation complicates matters further: Customers want to see the goods they are buying, and organisation who cross promote are required to sort out shipping costs before any single sale ever takes place. These complexities may very well explain why currently cross promotions are typically only used by large corporations, like Kellogg or Coca-Cola, with large marketing and advertising budgets.

The present invention may provide a method of overcoming these complexities through automation of the process of creating and maintaining cross-promotions. It also provides an efficient method of automated learning from sales data about the usefulness of future cross-promotions. The invention is centred around a multi-dimensional database, where items and item-categories are interlinked via weighted links (this is explained in more details in the next section). Once the sales data of a given package deal is entered, this causes the immediately relevant links to be updated. However, a further procedure ensures all other links in the database are made consistent with these changes, and so learning takes place across the whole database. Over time, this ensures efficient and consistent learning.

The present invention may allow retailers to offer a truly different experience to their on-line customers, while adding value, and differentiating themselves from competition. Package deals can be priced as a whole, allowing retailers to avoid outcomes of frequent price wars due to increased use of price comparison technologies by on-line shoppers. Shoppers who enjoy "good deals" are more likely to visit again sites that regularly display good value package deals. They are also more likely to buy on impulse from such sites. Since a virtual cross-promotion can be displayed electronically, no shipping and handling need to be taken place before any customer actually makes a purchase. Thus, the present invention takes advantage of the nature of on-line retailing to overcome the barriers to cross-promotions of retail products.

Suppose, for example that the retailer has a large quantity of surplus or slow moving shirts that would normally attract significant mark-downs, resulting in net margins at or close to zero. In this example the retailer may get a maximum of $4-per-shirt (list price say $10) on clearance. Using the invention the retailer can sell the product for a higher price, while offering consumers what they perceived to be better value. For example, a virtual deal selling the shirts and a certain branded shoes which targets the same customers. The packaged shirt-and-shoes can be priced competitively, for example at $7 more than the price of the shoes. This package is presented to consumers in the "special Internet deals", or "special offers" section of the user's main Web menu. The retailer can send a message to its own customer base through an individually customisable interface (it is also possible to set-up the system so that is done automatically for slow moving stocks). At absolutely no costs the retailer has created a new marketing channel for selling its branded shoes, while at the same time selling at a profit its slow moving shirts. Furthermore, the technology allows for on-line updating of the special deals, for example in response to changes in demand. This can happen automatically at no further costs to the seller.

Every time the retailer runs a cross promotion, data is fed back to the system and the marketing database is updated. This allows for information specific to the customers of the retailer to be accumulated in the system, which in turn leads to an increase ability of the system to select successful cross promotions.

The system can also be used externally, or between organisations. Consider the example above with the difference that the shoes and shirts are sold be separate organisations. Using the invention - if the two organisations agree the details of the cross promotion - the virtual package can be displayed by both e-commerce channels (e.g. on their websites).

The invention is particularly attractive for inter-organisation promotions involving "Zero gravity" goods (like software, or memberships to pay-sites). This is because for these goods, there is no shipping & handling. An example of such cross-promotion would be "Buy this financial software today, and get a half-price annual subscription to FinancialData.com".

An embodiment of the invention will now be described, by way of example, with reference to the accompanying drawings, in which:

Fig. 1 is a flow chart showing how the invention may be used by a single organisation;
Fig. 2 is a flow chart showing how the invention can be used to create cross promotions between different retailers;
Fig. 3 is a flow chart showing a user case study;
Fig. 4 is a flow chart showing how the supervisor can logon;
Fig. 5 is a flow chart showing how the supervisor can manage other users
Fig. 6 is a flow chart showing how the supervisor can manage the marketing knowledge base;
Fig. 7 is a flow chart showing how the marketing staff can manage the product;
Fig. 8 is a flow chart showing how the marketing staff can manage the GCPs;
Fig. 9 is a flow chart showing how the marketing staff can manage the target customer categorization;
Fig. 10 is a flow chart showing how the marketing staff can manage the functional categorization;
Fig. 11 is a flow chart showing how the marketing staff can manage cross promotions;
Fig. 12 is a flow chart showing how the marketing staff can manage the goals;
Fig. 13 is a flow chart showing how the marketing staff can set feedback; and
Fig. 14 is a flow chart showing a description of the system and subsystem classes in Unified Modelling Language (UML)

The specification of the algorithms will first be described. Denote by Link(X, Y), the weight of the link between X and Y (where X and Y can each be a product group, a target group, a goal or a GCP). All links carry the value 0 by default, that is, unless specified differently by the user or by the update formulae in algorithm 2.

Algorithm 1: Maximisation

Input (Goal, Item)
Step 1: For each GCP linked by the goal, repeat the following process.
Now we have: Item, GCP.
For each item k belonging to the same target group
(excluding the original product selected for promotion)
compute the following:

$$\mathit{Mark(k) = Link(target\ group(k),\ GCP) + Link(immediate\ product\ group(k),\ GCP) + Link(immediate\ product\ group(k)\ \&\ immediate\ product\ group\ (original\ item)) + Link\ (immediate\ product\ group\ (k),\ target\ group\ (k)) + Link(immediate\ product\ group(original\ item),\ target\ group(k))}$$

Select the items with the highest marks (for example, the top 5).

For each item k belonging to the a sub-target group of the original product (if such sub-categories exist)

compute the following:

*Mark(k) = Link(target group(k), GCP) + Link(immediate product group(k), GCP) + Link(immediate product group(k) & immediate product group(original item)) + Link (immediate product group(k), target group(k)) + Link(immediate product group(original item), target group(k))*

Select the items with the highest marks (for example, the top 5). These promotions are return with an indication that they attract a narrower target group.

For each item k belonging to parent of the target group of the original product (if such parent exist) compute the following:

*Mark(k) = Link (target group(k), GCP) + Link (immediate product group(k), GCP) + Link(immediate product group(k) & immediate product group(original item)) + Link(immediate product group(k), target group(k)) + Link(immediate product group(original item), target group(k))*

Select the items with the highest marks (for example, the top 5). These promotions are return with an indication that they are likely to be less accurate.

Return 3 lists of promotions.

Step 2: For each GCP, multiply each of the marks returned using the following formula:

*Updated mark of item k, given the GCP = Mark(k) x Link (GCP, goal)*

Step 3: Merge all returned lists into 3 list and rank according to updated marks. Select promotions with highest marks (for example top 5) in each list.

Algorithm 2: Updating marketing information

Input (GCP; two items: k1 and k2; success/failure parameter $-1 \leq x \leq 1$)

Update the following link using these formulae:

1. Link(target group(k1), GCP) + x
2. Link(target group(k2), GCP) + x
3. Link(immediate product group(k1), GCP) + x
4. Link(immediate product group(k2), GCP) + x
5. Link(immediate product group(k1), immediate product group(k2)) + x
6. Link(immediate product group(k), target group(k)) + x
7. Link(immediate product group(original item), target group(k)) + x

8. Link(immediate product group(k), target group(original item)) + x
9. Link(immediate product group(original item), target group(original item)) + x

Note: If the two products belong to the same target group then formulae 2, 8 and 9 are identical to formulae 1, 6 and 7. In this case the update only takes place once, not twice.

Algorithm 3: Real-time package deal updating

Denote by ERS the expected rate of sales for a specific cross promotion, for example based on statistical analysis of sales of similar packages. Let $ARS_t$ denotes the actual rate of sales, as measured t periods (e.g. hours) after the cross promotion became available to consumers. Then the price of the cross promotion can be set at time t+1 to be:

$$p_{t+1} = p_t \times [1 + (ARS_t\text{-}ERS)/ERS]$$

This formula is applied at each period of sales measurement.

Algorithm 4: Selecting a cross promotion partner

If the invention is used to create cross promotions across organisations, then a method for selecting a partner becomes necessary. More specifically, an organisation using the invention to promote a product, for example because it is a slow mover, can be approached by a number of other organisation wishing to cross promote this product with one of their products. Denote this organisation by O and the product by X. The invention then works as follows:

1. The system informs all parties (including O) of the multiplicity of potential partners for cross promotion.
2. All interested organisations submit bids specifying the details of the proposed cross promotion, for example the proportion of the cross promotion price that they are willing to give to O for each sale of X.
3. O can either select one of these bids - in which case it becomes legally binding for both parties, or reject all bids and not cross promote.

We now provide a detailed example for the working of the invention. The database we use includes 10 products. In reality the system is likely to be used for thousands of items. Such a database will be difficult to illustrate here. However, the example below is sufficiently large to explain fully the workings of the invention.

We begin by describing the various components of the system. These components do not change at run time.

Goals

(1) Surplus/Slow mover, (2) New product.

Generic Cross Promotions (GCPs)

(1) "Buy X and Y for price p", (2) "Buy X, get Y for a special price/discount", (3) "Buy X, get Y free".

Products

P1, P2, P3, P4, P5, P6, P7, P8, P9, P10 (these normally correspond to a code, or a description of the products, e.g. "blue jeans with pink flower, code CFJ876")

Functional Classification

P1, P2, P3, P4 are shirts
P5, P6, P7 are trousers
P8, P9, P10 are shoes
Shirts are clothes
Trousers are clothes

Target Group Classification

P1, P5, P8 targeted at "male teenagers"
P2, P3, P6, P9 targeted at "female teenagers"
P4, P7, P10 targeted at "female early 20s"
"Male teenagers" are "teenagers"
"Female teenagers" are "teenagers"
"Female teenagers" are "women"
"Female early 20s" are "women"

We now describe the weighted links in the system. These weights can change in run time (in respond to data on how well/badly cross promotions perform). If a link is not specified then the system assigns a value of 0 to it.

Weighted links between goals and GCPs

Link (Surplus, GCP1)=0.8
Link (Surplus, GCP2)=0.3
Link (New Product, GCP3)=0.8

Weighted links between GCPs and functional specification classes

Link (GCP1, Clothes)=0.8
Link (GCP1, Shirts)=0.8
Link (GCP1, trousers)=0.6
Link (GCP1, shoes)=0.5
Link (GCP2, Clothes)=0.8
Link (GCP2, Shirts)=0.8
Link (GCP2, trousers)=0.6
Link (GCP2, shoes)=0.5
Link (GCP3, Clothes)=0.7
Link (GCP3, Shirts)=0.7
Link (GCP3, trousers)=0.5
Link (GCP3, shoes)=0.4

Weighted links between GCPs and target groups

Link (GCP1, male teenagers)=0.1
Link (GCP1, female teenagers)=0.3
Link (GCP1, female 20s)=0.6
Link (GCP1, teenagers)=0.1
Link (GCP1, women)=0.7
Link (GCP2, male teenagers)=0.1
Link (GCP2, female teenagers)=0.3
Link (GCP2, female 20s)=0.6
Link (GCP2, teenagers)=0.1
Link (GCP2, women)=0.7
Link (GCP3, male teenagers)=0.1
Link (GCP3, female teenagers)=0.3
Link (GCP3, female 20s)=0.6
Link (GCP3, teenagers)=0.1

Link (GCP3, women)=0.7

Weighted links between product classes and target groups

Link (Shirts, male teenagers)=0.8
Link (shirts, female teenagers)=0.9
Link (shirts, female 20s)=0.9
Link (shirts, teenagers)=0.7
Link (shirts, women)=0.8
Link (Trousers, male teenagers)=0.8
Link (trousers, female teenagers)=0.9
Link (trousers, female 20s)=0.9
Link (trousers, teenagers)=0.7
Link (trousers, women)=0.7
Link (Shoes, male teenagers)=0.7
Link (shoes, female teenagers)=0.9
Link (shoes, female 20s)=1
Link (shoes, teenagers)=0.8
Link (shoes, women)=1
Link (Clothes, male teenagers)=0.6
Link (clothes, female teenagers)=1
Link (clothes, female 20s)=1
Link (clothes, teenagers)=0.8
Link (clothes, women)=1

Weighted links between product classes to themselves

Link (shirts, shirts)=0.6
Link (shirts, trousers)=0.9
Link (shirts, shoes)=0.8
Link (shirts, clothes)=0.5
Link (trousers, trousers)=0.4
Link (trousers, shoes)=0.7
Link (trousers, clothes)=0.5
Link (shoes, shoes)=0.1
Link (shoes, clothes)=0.8
Link (clothes, clothes)=0.9

Generating a Cross Promotion

Suppose that the user wishes to promote P10 because it is a slow mover. The user specifies to the system the product and selects the goal "surplus/slow mover". We now explain how the system creates a list of cross promotions based on this input.

P10 is a pair of shoes targeted at women in their early 20s. The candidates for cross promotions are therefore all products targeted at the same group: P4 and P7, and all products belonging to the parent group, which in this case is "women". These are P2, P3, P6 and P9.

The system now performs algorithm 1:

Since the goal is "surplus/slow mover" both GCP1 and GCP2 are considered.
We first consider P4 and P7 using GCP1:

Mark (P4)=Link(target-group(P4), GCP1) + Link(product- group(P4), GCP1) + Link(Product-group(P4), Product-group(P10)) + Link (product-group(P4), target-group (P4)) + Link(product-group(P10), target-group(P4)) =0.6+0.8+0.8+0.9+1=4.1

Applying the same formula for P7, we get: Mark (P7)=0.6+0.6+0.7+0.9+1=3.8
Multiply both by Link ("surplus", GCP1), which is 0.8 we get that the final mark for P4, using GCP1, is 4.1×0.8=3.28 and the final mark for P7, using GCP1, is 3.04.

Next we consider the same two products using GCP2.
Mark (P4)=0.6+0.8+0.8+0.9+1=4.1
Mark (P7)=0.6+0.6+0.7+0.9+1=3.8
Multiply both by Link ("surplus", GCP2), which is 0.3 we get that the final mark for P4, using GCP2 is 4.1×0.3=1.23 and the final mark for P7 is 1.14.
So the system recommends cross promoting P10 with P4 using GCP1, i.e. "buy P4 and P10 for a price, p". Second best is cross promoting P10 with P7 using GCP1, followed by cross promoting P10 with P4 using GCP2, and finally cross promoting P10 with P4 using GCP2.

The same procedure is repeated for products P2, P3, P6 and P9, which belong to the parent group of P10.

<u>Updating of marketing information based on performance</u>

Suppose now that the user selected to cross promote P10 with P4 using GCP1. The user then specifies a price for the bundle P10 and P4. For example, the price is set to the price charged for P4 plus the 70% of the original price of P4.
The user past experience of reducing the price of shoes by 30% is that it leads to increase sales of about 40%. So the user specifies a numerical success criteria based on this figure. Suppose further that the cross promotion was more successful than the user expected by 40%. The value of x is therefore 0.4.

Each of the following links is then increased by 0.4:

Link(female early 20s, GCP1) increased from 0.6 to 1.
Link(shoes, GCP1) increased from 0.5 to 0.9.
Link(shirts, GCP1) increased from 0.8 to 1.2.
Link(shirts, shoes) increased from 0.8 to 1.2.
Link(shirts, female early 20s) increased from 0.9 to 1.3.
Link(shoes, female early 20s) increased from 1 to 1.4.

The system described below and with reference to Figures 3-14 implements the method and algorithms of the above invention. This system is used either by a single user, or multiple users to create cross promotions including products and/or services specified by users and based on their chosen goals. The overall goal of the system is to create cross promotions that are likely to appeal to customers. The system can provide the following facilities: create cross-promotions based on a user defined product and goal; monitor cross-promotions, whereby the system will be able to follow and trace any generated cross-promotions and to change, update and/or cancel any cross-promotion; and learning based on a user-defined success criterion, wherein the system updates its knowledge base in order to improve its future performance (i.e. the likelihood of producing successful cross promotions).

The system is to service two basic users types: the marketing staff and the CrossPromotionBuilder project supervisor. The system operates on two general levels. The first of these is on-line activity monitoring: the system's interfaces will provide a utility for monitoring cross-promotions, defining cross-promotion outlines and providing collective summary information and statistics over a given period of time on diverse criteria (i.e. successful/unsuccessful, cross-promotions goals etc.). The second level is admin monitoring: the system will provide the system administrator with an interface in order to set-up and maintain the links. The links define connections and relations between various components (i.e. products, categories etc.) in the system.

The following description is a breakdown of the system into its different elements and their macro-behaviour patterns. As mentioned above, there are two types of users. The marketing staff are the part of the organization that deals with the marketing, promotions, pricing and sales. These people can view and create bundles relating to given products. However, they can't access the CrossPromotionBuilder engine definitions. The supervisor (System Administrator) can access and control all elements of the system. The aim of the system administrator is initially to set-up the system. Within the set-up stage, the system administrator defines the product groups, generic cross promotions, market categories and the links between them all. From this point onwards, constant maintenance is required every set period of time.

A product is the main parameter (along with goals and inventory) defined by the marketing staff for the cross-promotion. The product is the pivot around which the cross-promotion evolves. Every product has two main properties. The first of these is cost, i.e. the current price of the product. The second property is inventory, i.e. how much of a specific product is currently in stock and how does the product's quantity vary, according to its sales. Cross-promotions are created according to a given product and the goal.

A bundle is the result of the cross-promotion process. The bundle is the output of the maximization function of the cross-promotion. In case of exchange between two organisations, we perform an external cross-promotion. In such case, additional parameters have to be brought into consideration. They are who sells the product, where the product can be found, and which of the retailers gets what. This question arises because the external cross-promotion creates a certain surplus, as the price you would get this way is higher than what you would have got in case you would have sold the product separately.

When the cross-promotion process ends, the marketing-staff are require to supply the system with feedbacks. These feedbacks are composed of success criteria, which are functions reflecting what you would have expected to happen and what has actually has occurred. The Success Criteria is stated in percentages form.

Within the maximization function of the cross-promotion process, the marketing-staff generate the input by choosing a product and the cross-promotion goals (slow movers, increase basket size and promotion). The output of this process is a certain price, a result of the cross-promotion for a bundle, which includes the chosen product.

Exchange of goods between more than one company in order to create a joint bundle. In such external cross-promotion case, the following parameters have to be taken into consideration: who sells the product and where can it be found, and who (referring to the retailers) gets what? Cross-promotion creates a certain surplus and the arising question is how do we split the surplus between the companies? This is due to the fact that the price you would get this way is higher than what you would have got in case you would have sold the product separately.

When the cross-promotion process has finished, the system notifies the marketing-staff in order to get their feedbacks. The feedback presents the levels of success (i.e. outcome of the cross-promotions; desired/achieved). At this stage, the links are also updated, according to the cross-promotion outcome; the links' weights then change. For example, in the case of a successful specific cross-promotion where the link's weight was neutral (=0), the weight would change to perfect match (=1). In case the cross-promotion process terminates, while running, the user should give no feedback.

When the cross-promotion process requires changes/updates, they will be saved in case they are successful. One of the system's aims is to learn any successful changes and updates done by the marketing staff.

As mentioned above, there are two system actors:
Supervisor and Marketing staff. The Supervisor can also act as a Marketing staff. The following table shows actors that involving in the system along with their functional requirements with a focus on value added to the user.

| Actor | Use Cases |
|---|---|
| Supervisor | Logon |
| | Manage Product Knowledge Base |
| | Manage Marketing Knowledge Base |
| | Manage User |
| Marketing Staff | Manage Cross Promotion |
| | Update Marketing Knowledge |
| Inventory System | Manage Product Knowledge Base |

## Claims

1. A method of creating marketing data containing information specific to the creation of virtual cross promotions, the method comprising steps of:

    obtaining

    (a) a list of goals, representing various reasons why the user might select a product or service for cross promotion;
    (b) a list of generic cross-promotions, representing various cross-promotion templates;
    (c) a functional classification of the goods/services database; and
    (d) a classification of the goods/services database according to their target groups; and

    defining

    (e) weighted links between generic cross-promotions and various classes in the functional classification representing the degree of correlation between a certain generic cross-promotion and a set of products, the links being positive or negative
    (f) weighted links between generic cross-promotions and various classes in the consumer target groups' classification representing the correlation between the generic cross-promotion and the target group it links;
    (g) weighted links between various classes in the functional classifications, representing the degree of match between these products in a cross promotion; and
    (h) weighted links between the goals and the generic cross-promotions, each goal corresponding to at least one generic cross-promotion, and when the goal corresponds to more than one generic cross-promotion, a weight
    $\omega \in (0,1)$ is placed on each of these correspondences representing the relative match between the goal and corresponding at least one generic cross-promotion.

2. A method of trading comprising:

    creating market data by a method according to claim 1,
    selecting a product or service to be traded by the user and a goal from said list of goals,
    generating at least one cross promotion from said product or service with at least further product or further service, the at least one cross promotion being selected on the basis of the weighted links defined by steps (e) to (h); and
    trading using the at least one cross promotion.

3. A method according to claim 2, wherein a plurality of cross promotions are generated and ranked in dependence on said weighted links.

4. A method according to claim 2, wherein said generation of said at least one cross promotion selects said at least one further product or further service from predefined products or predefined services, and said at least one cross promotion including data representing the desired conditions for said at least one cross promotion.

5. A method according to claim 2 wherein the at least one further product or service is supplied by a different retailer from the user.

6. A method according to claim 2 wherein the weighted links defined by at least one of steps (e) to (h) are updated on the basis of the results of the tracking using the at least one cross promotion.

FIG. 1

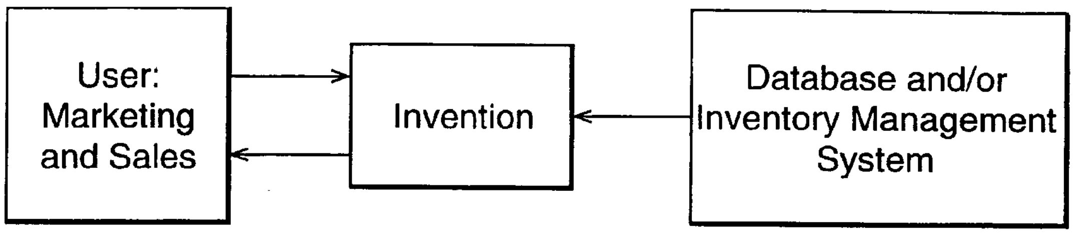
User:
Marketing
and Sales
Invention
Database and/or
Inventory Management
System

FIG. 2

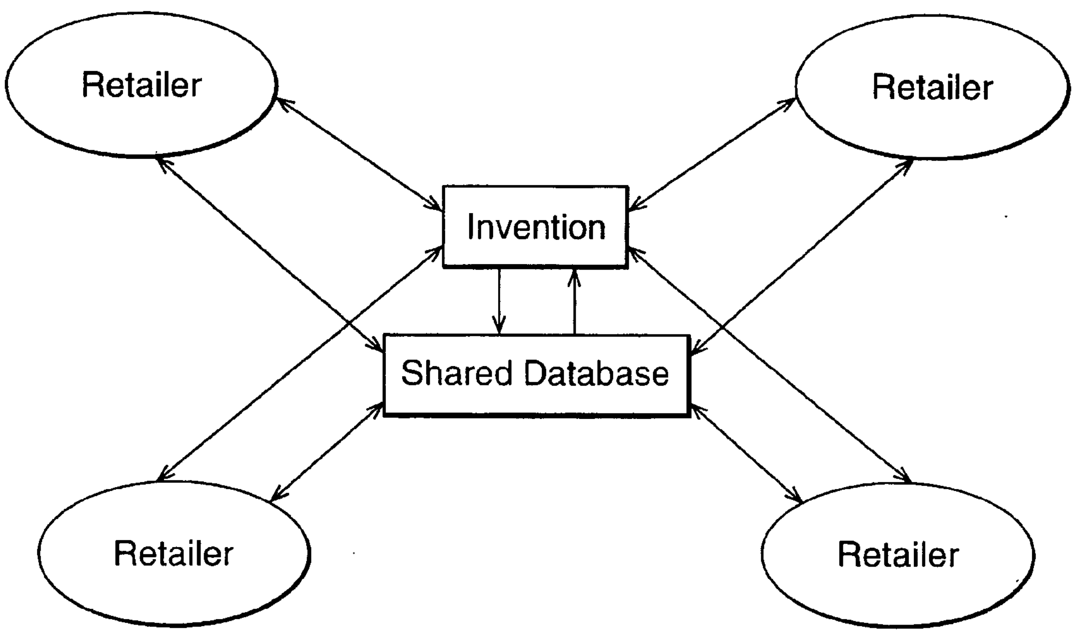
Retailer
Retailer
Invention
Shared Database
Retailer
Retailer

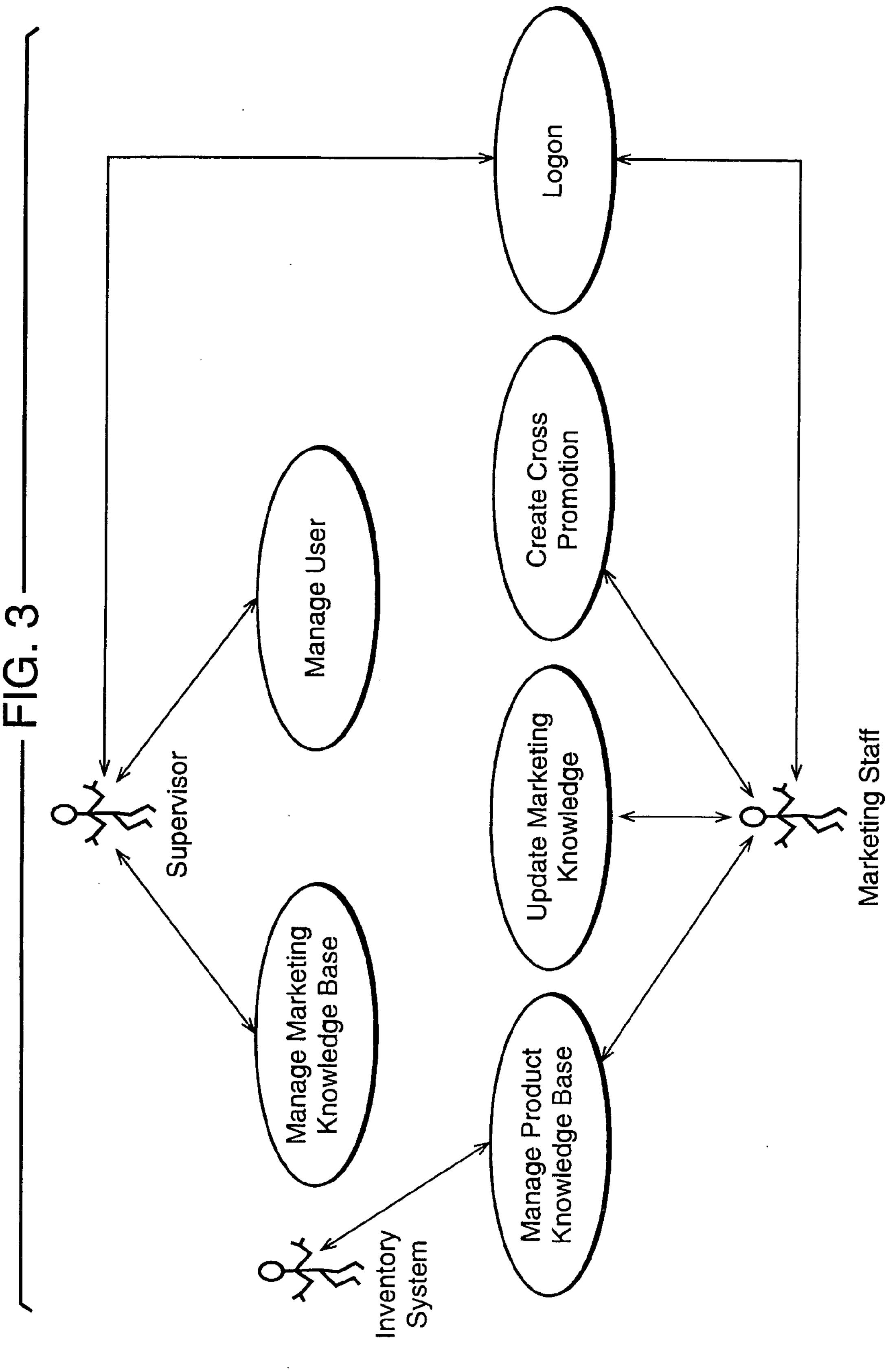
Logon
Manage User
Create Cross Promotion
Supervisor
Update Marketing Knowledge
Marketing Staff
Manage Marketing Knowledge Base
Manage Product Knowledge Base
Inventory System

FIG. 3

FIG. 4

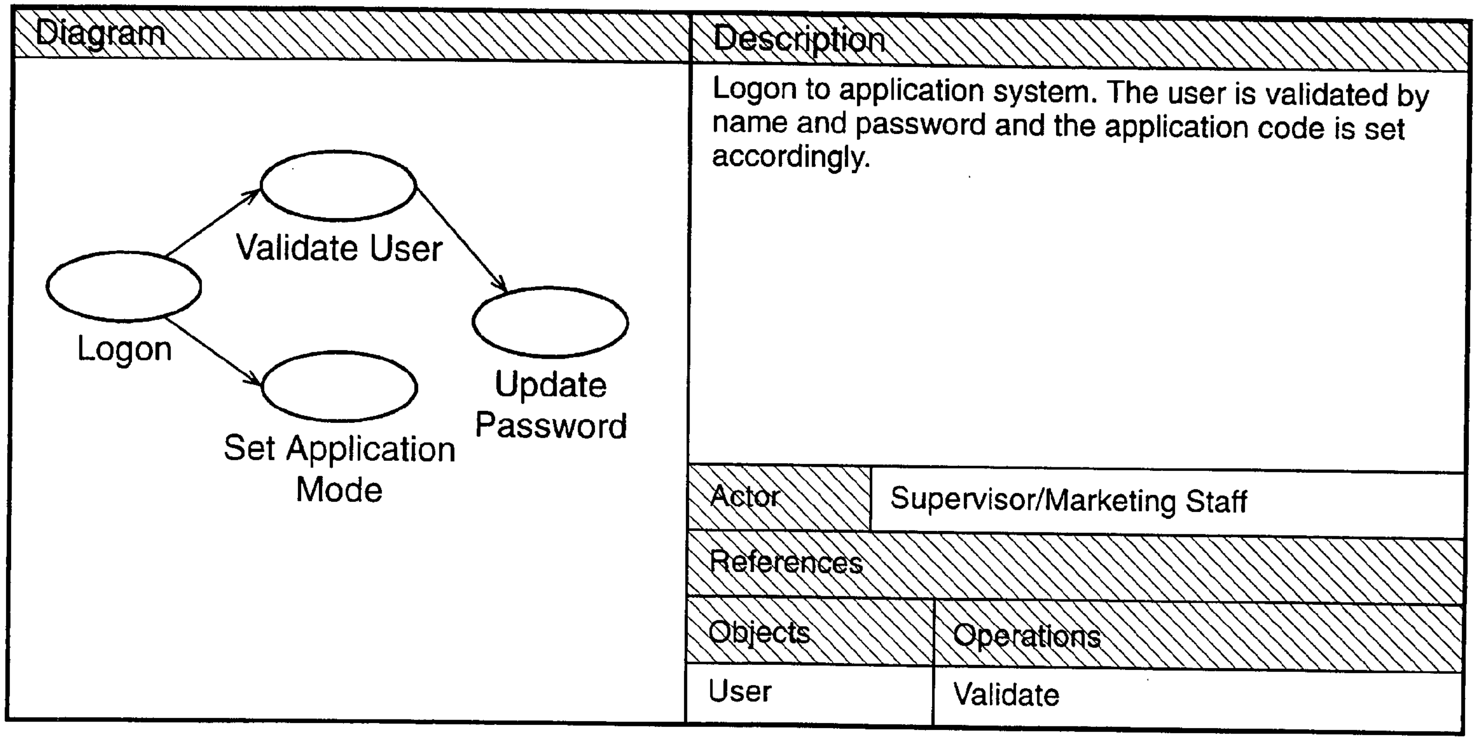
Diagram
Logon
Validate User
Set Application Mode
Update Password
Description
Logon to application system. The user is validated by name and password and the application code is set accordingly.
Actor
Supervisor/Marketing Staff
References
Objects
Operations
User
Validate

FIG. 5

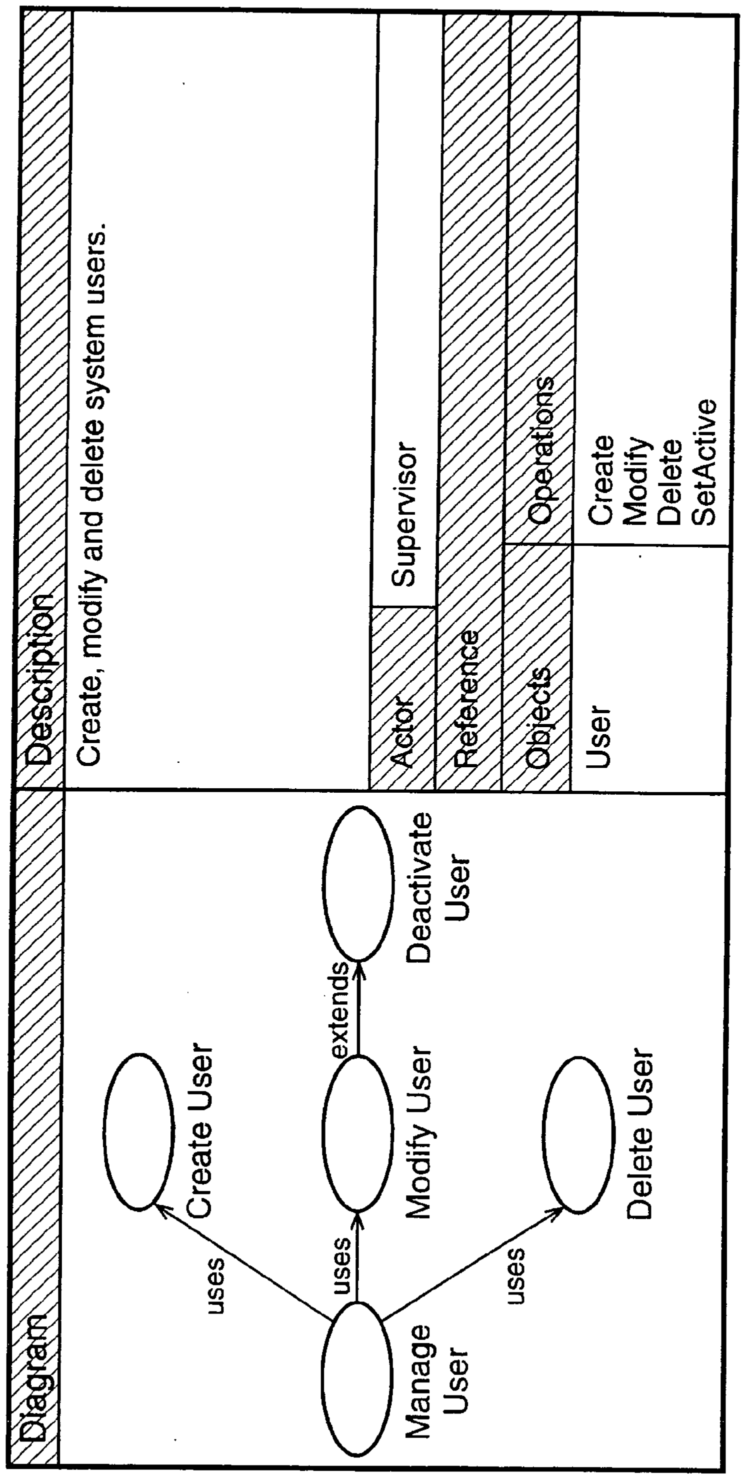
Diagram
Manage User
uses
uses
uses
Create User
Modify User
Delete User
extends
Deactivate User
Description
Create, modify and delete system users.
Actor
Supervisor
Reference
Objects
Operations
User
Create
Modify
Delete
SetActive

FIG. 6

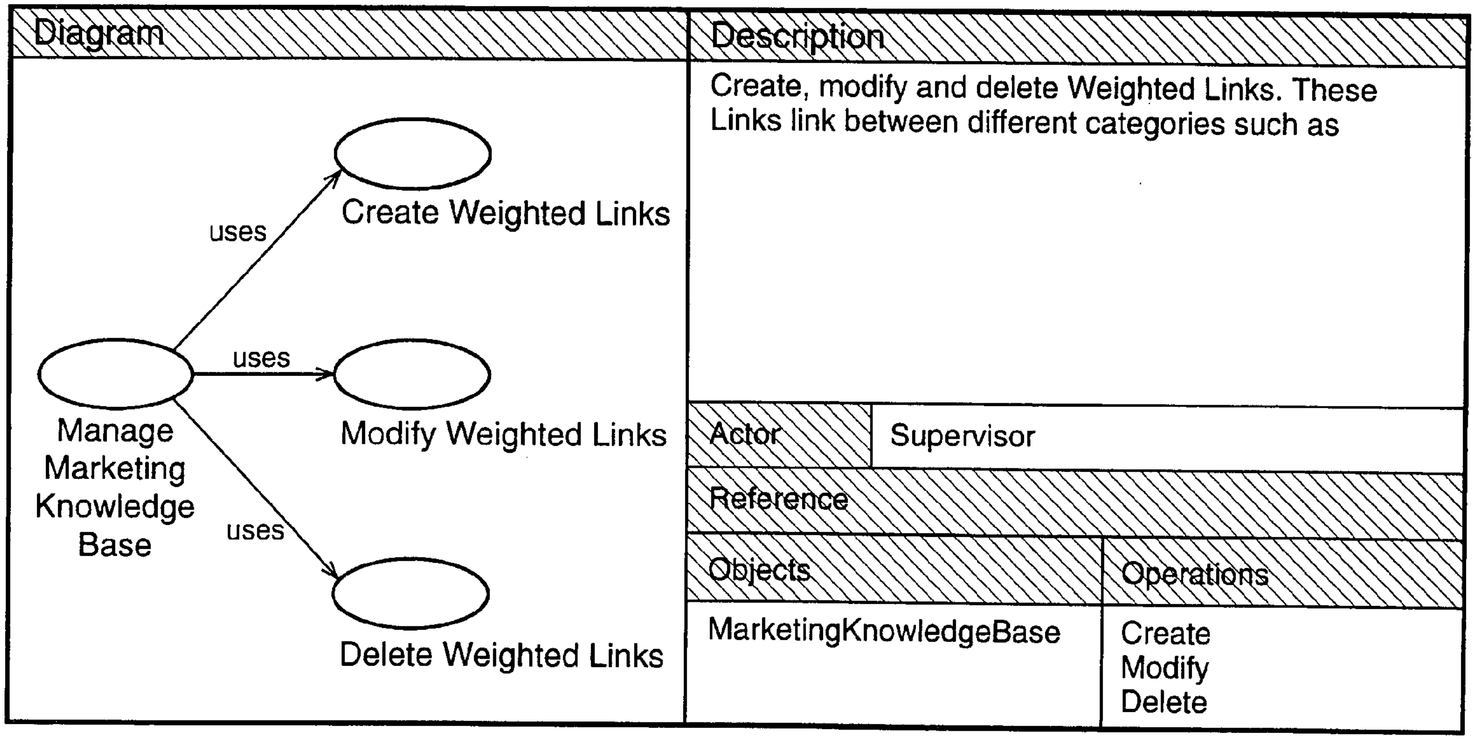
Diagram
Manage
Marketing
Knowledge
Base
uses
uses
uses
Create Weighted Links
Modify Weighted Links
Delete Weighted Links
Description
Create, modify and delete Weighted Links. These
Links link between different categories such as
Actor
Supervisor
Reference
Objects
Operations
MarketingKnowledgeBase
Create
Modify
Delete

FIG. 7

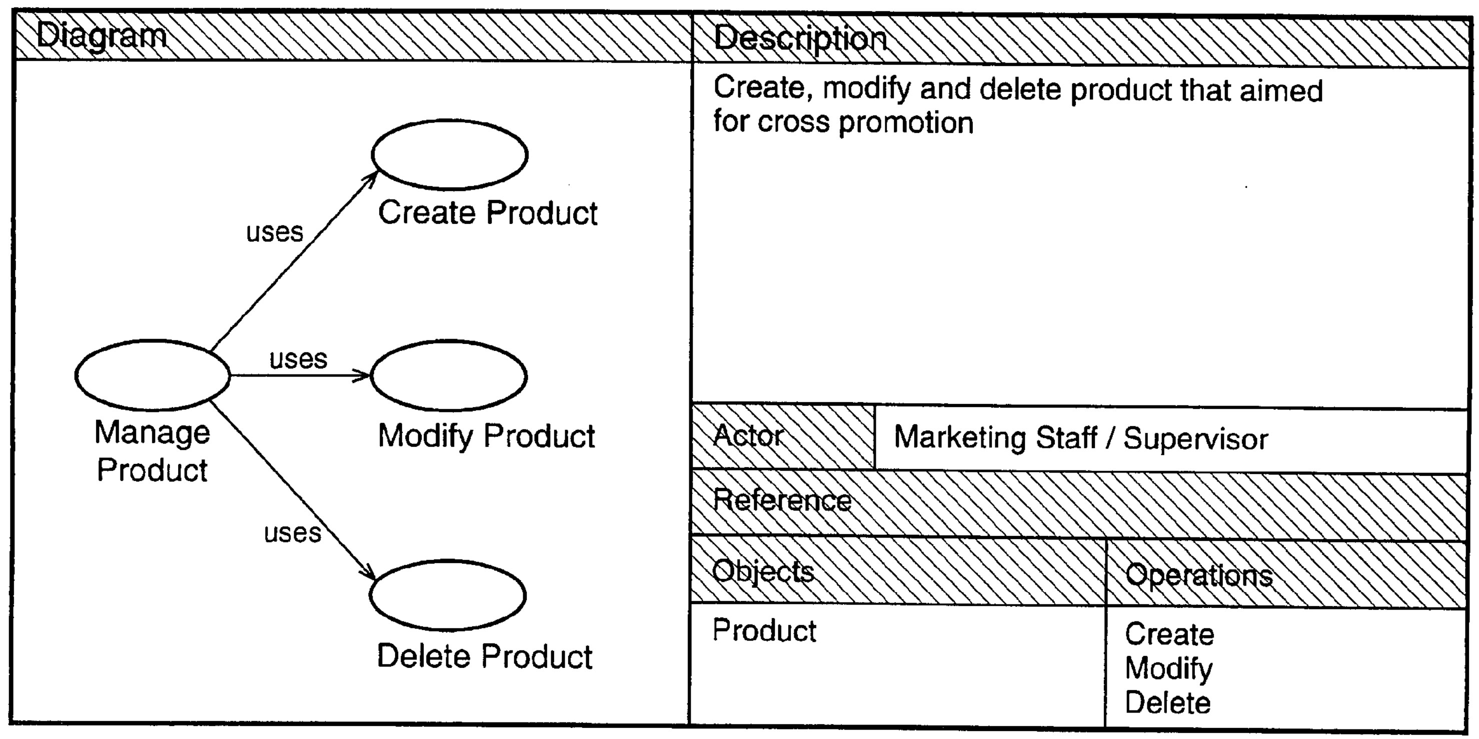
Diagram
uses
Create Product
uses
Manage
Product
Modify Product
uses
Delete Product
Description
Create, modify and delete product that aimed
for cross promotion
Actor
Marketing Staff / Supervisor
Reference
Objects
Operations
Product
Create
Modify
Delete

FIG. 8

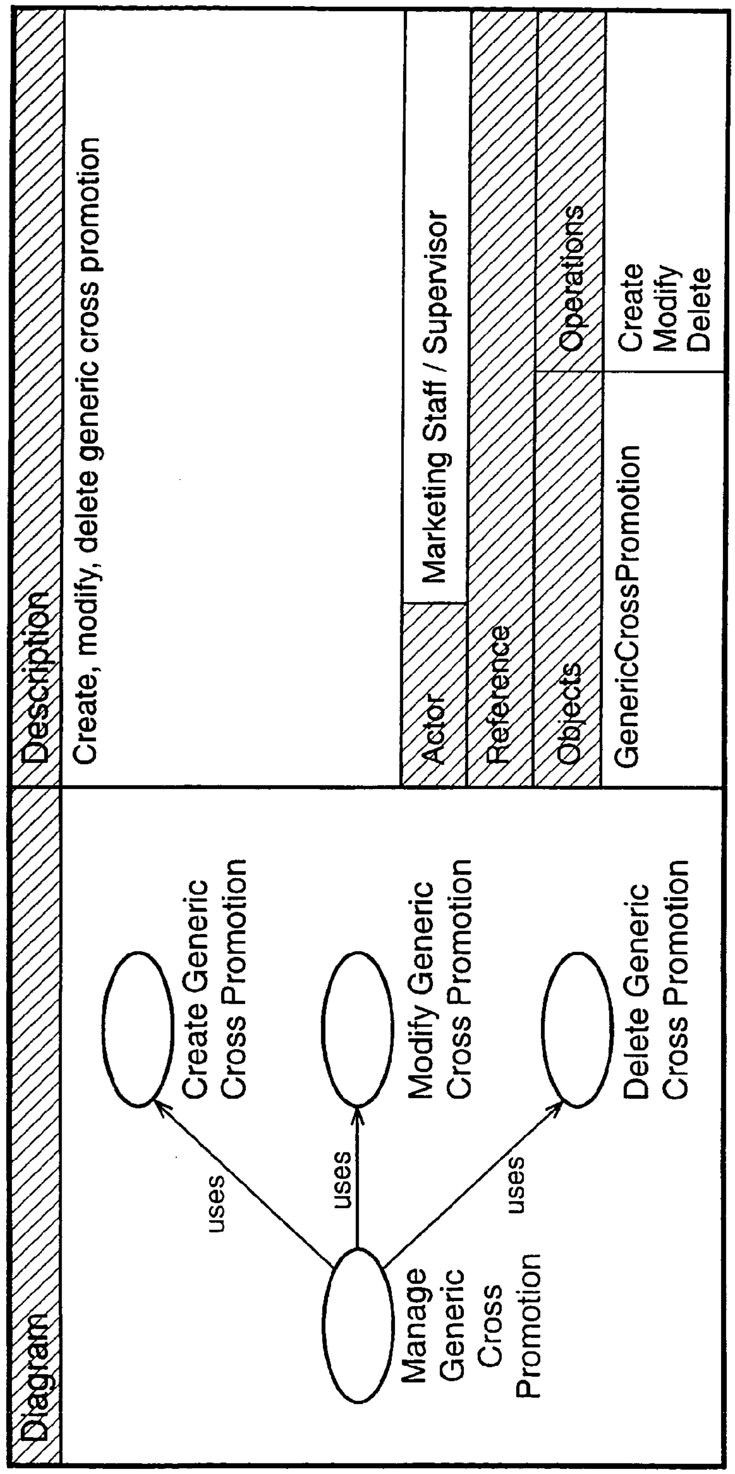
Diagram
Manage Generic Cross Promotion
uses
uses
uses
Create Generic Cross Promotion
Modify Generic Cross Promotion
Delete Generic Cross Promotion
Description
Create, modify, delete generic cross promotion
Actor
Marketing Staff / Supervisor
Reference
Objects
Operations
GenericCrossPromotion
Create
Modify
Delete

FIG. 9

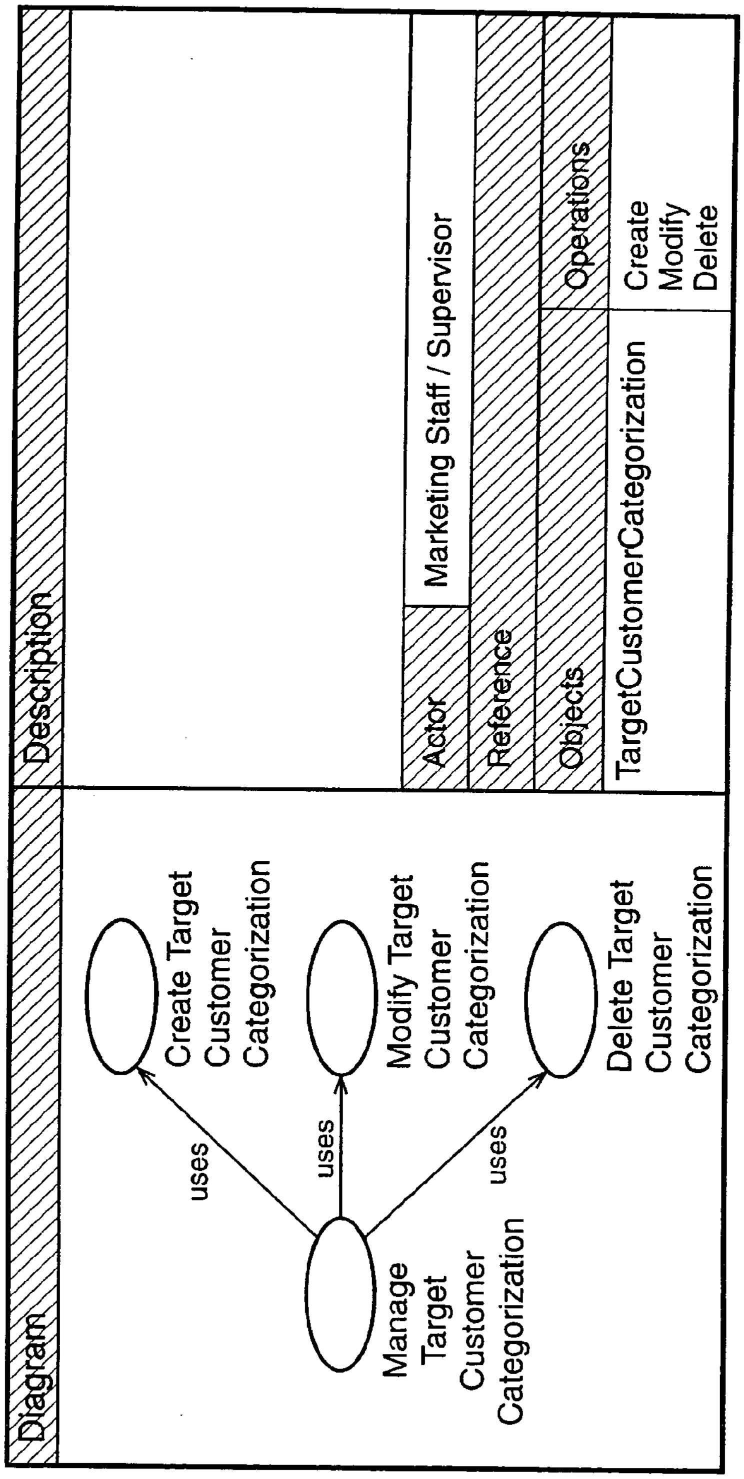
Diagram
Manage Target Customer Categorization
uses
uses
uses
Create Target Customer Categorization
Modify Target Customer Categorization
Delete Target Customer Categorization
Description
Actor
Marketing Staff / Supervisor
Reference
Objects
Operations
TargetCustomerCategorization
Create
Modify
Delete

FIG. 10

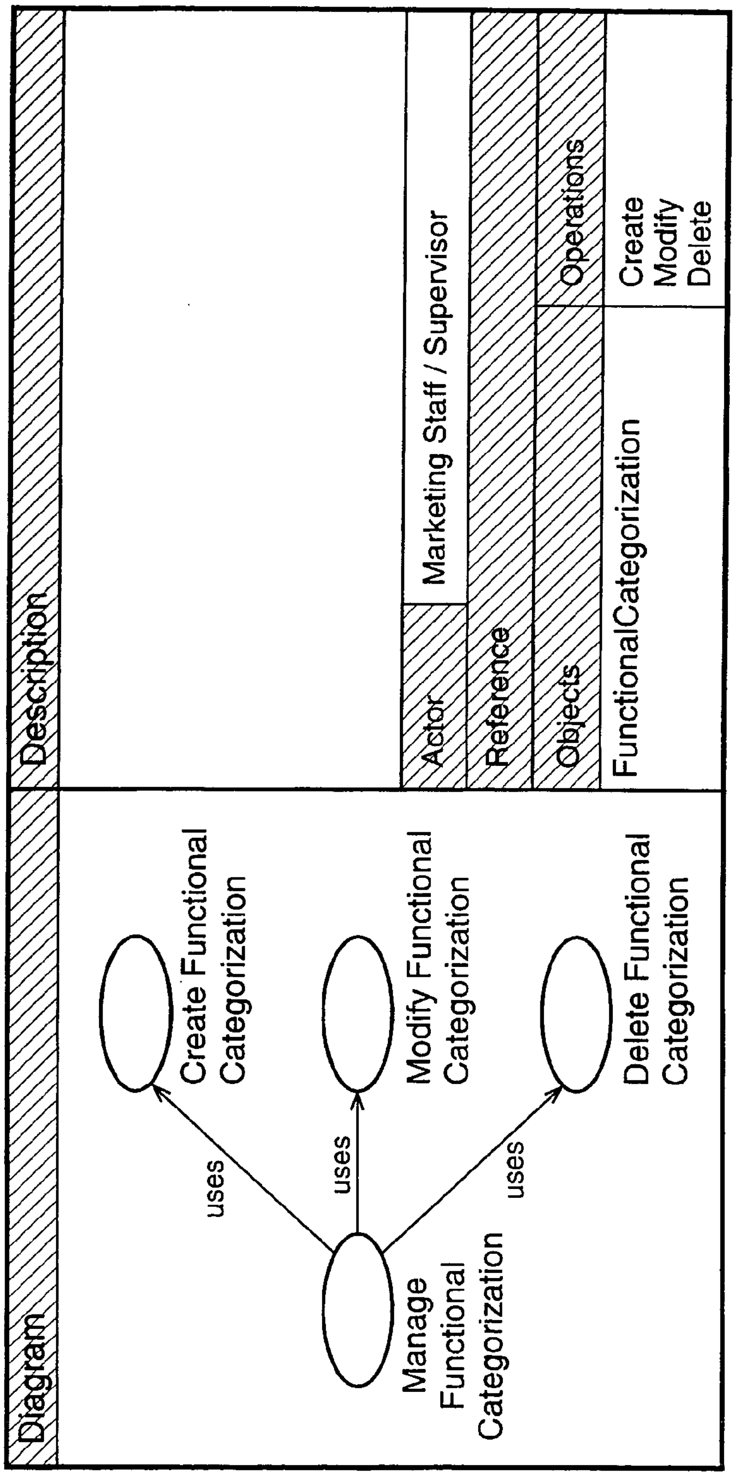
Diagram
Manage Functional Categorization
uses
uses
uses
Create Functional Categorization
Modify Functional Categorization
Delete Functional Categorization
Description
Actor
Marketing Staff / Supervisor
Reference
Objects
Operations
FunctionalCategorization
Create
Modify
Delete

FIG. 11

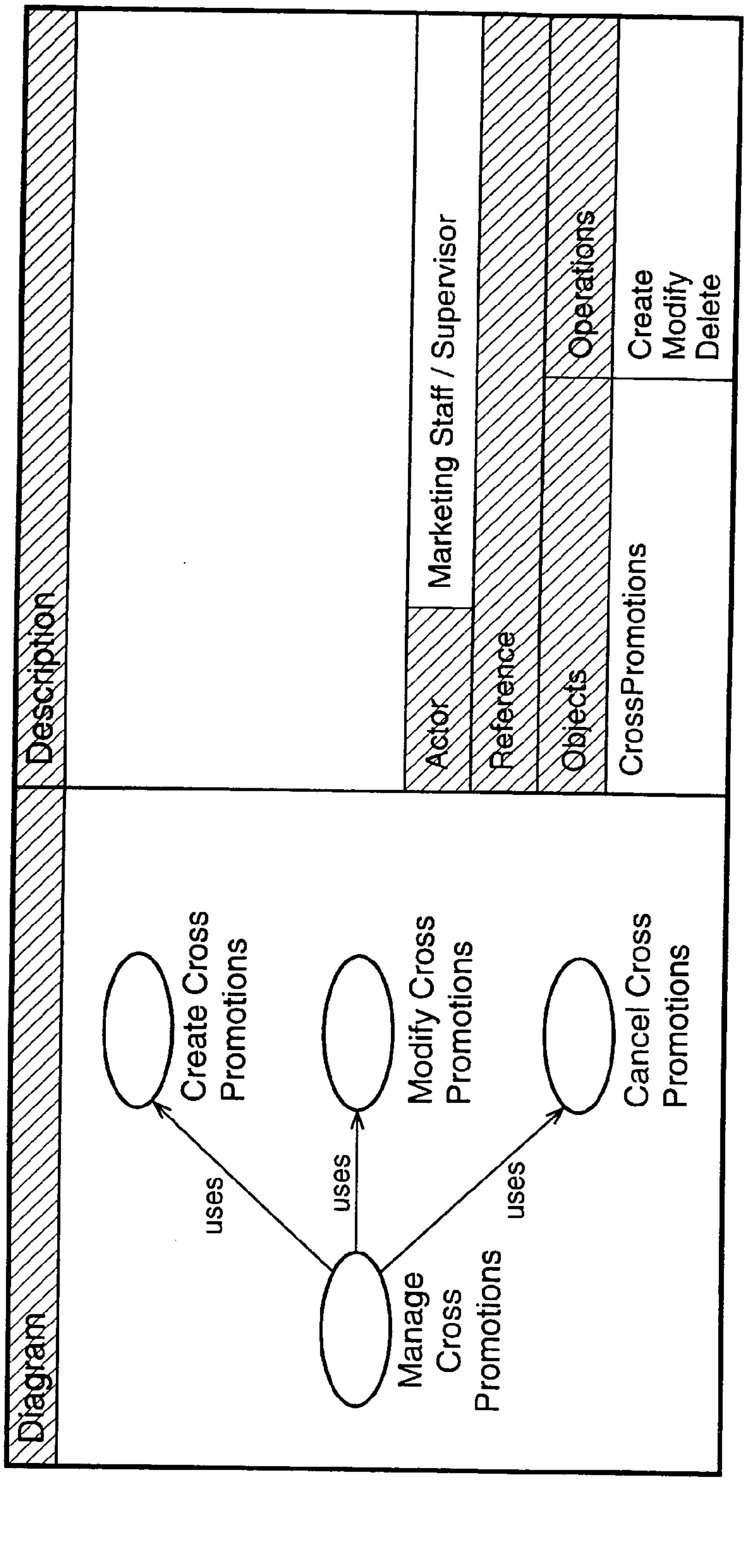
Diagram
Manage Cross Promotions
uses
uses
uses
Create Cross Promotions
Modify Cross Promotions
Cancel Cross Promotions
Description
Actor
Marketing Staff / Supervisor
Reference
Objects
Operations
CrossPromotions
Create
Modify
Delete

FIG. 12

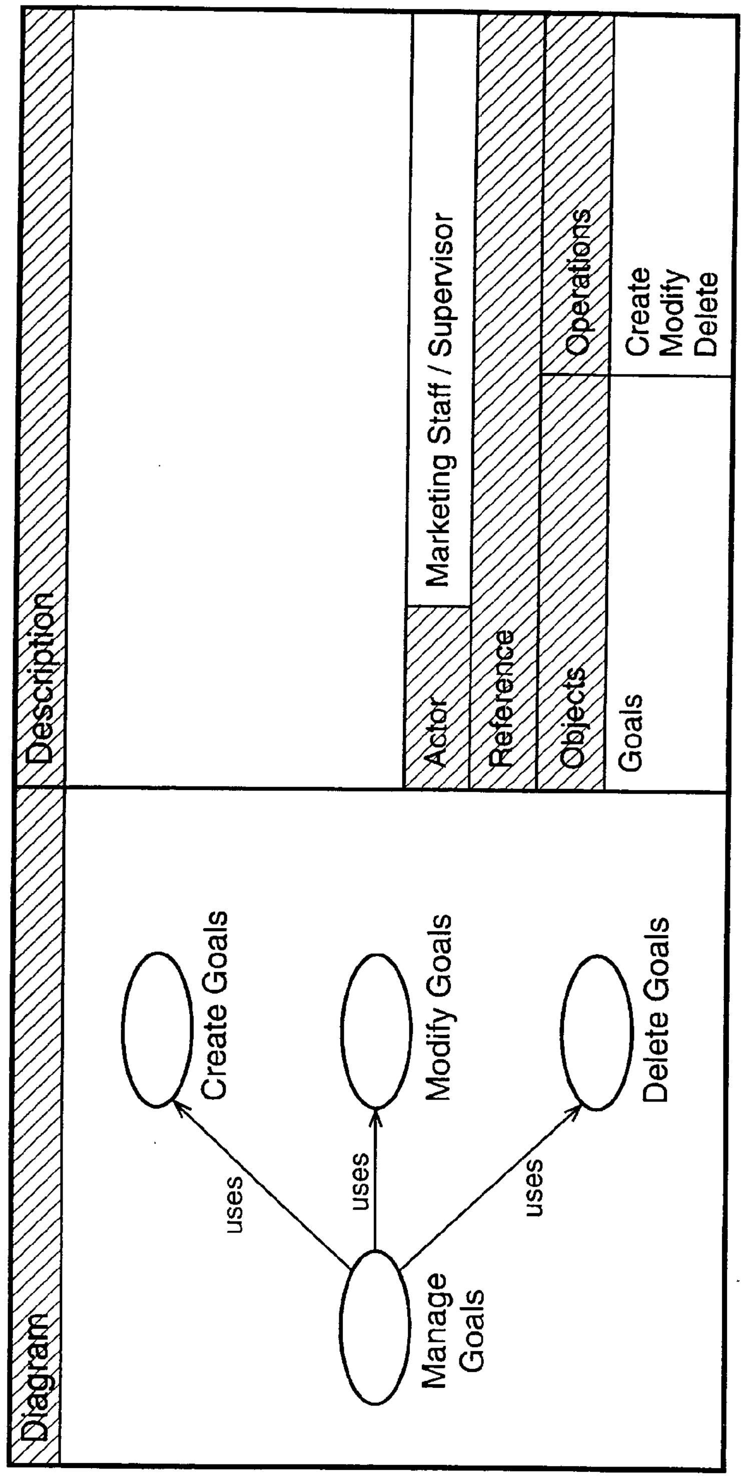
Diagram
Manage Goals
uses
uses
uses
Create Goals
Modify Goals
Delete Goals
Description
Actor
Marketing Staff / Supervisor
Reference
Objects
Operations
Goals
Create
Modify
Delete

FIG. 13

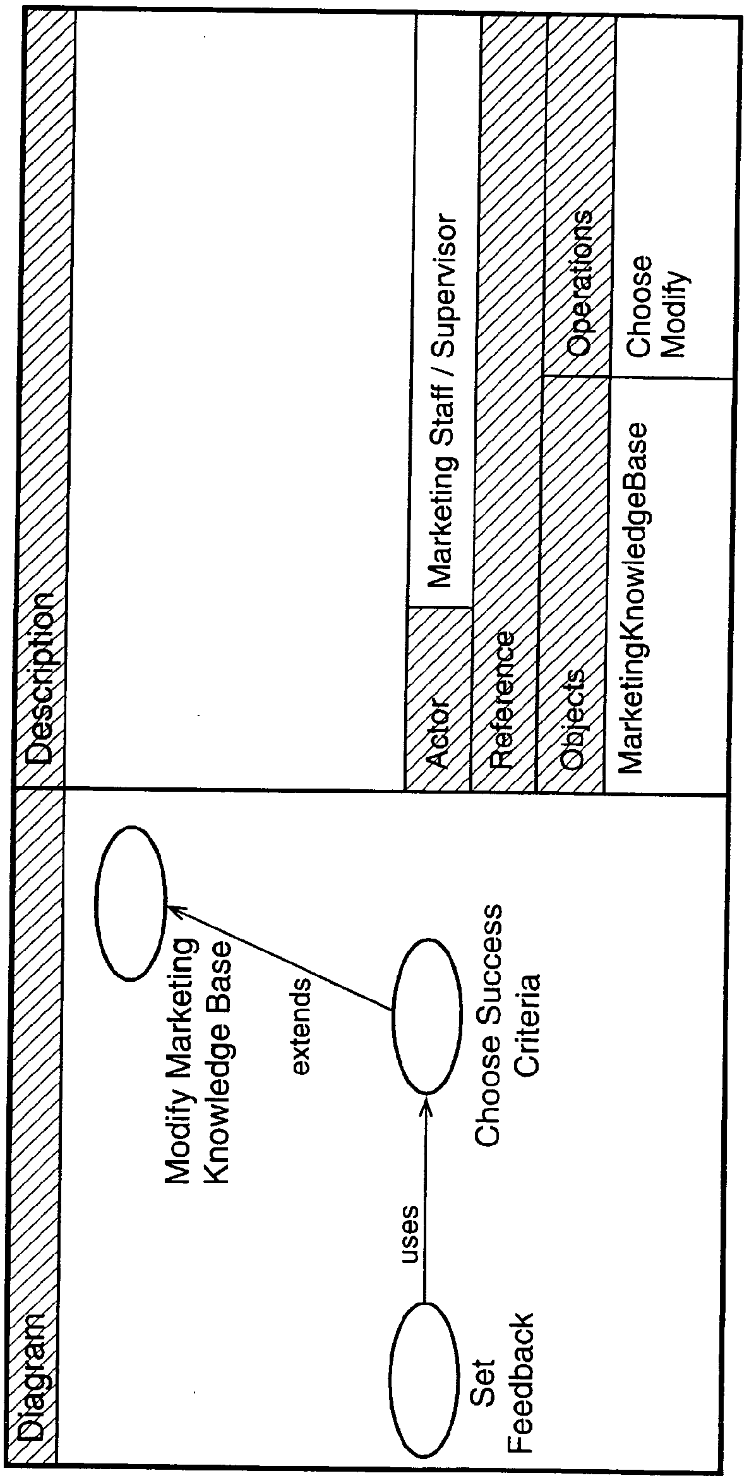

Diagram
Set Feedback
uses
Choose Success Criteria
extends
Modify Marketing Knowledge Base
Description
Actor
Marketing Staff / Supervisor
Reference
Objects
Operations
MarketingKnowledgeBase
Choose
Modify

FIG. 14

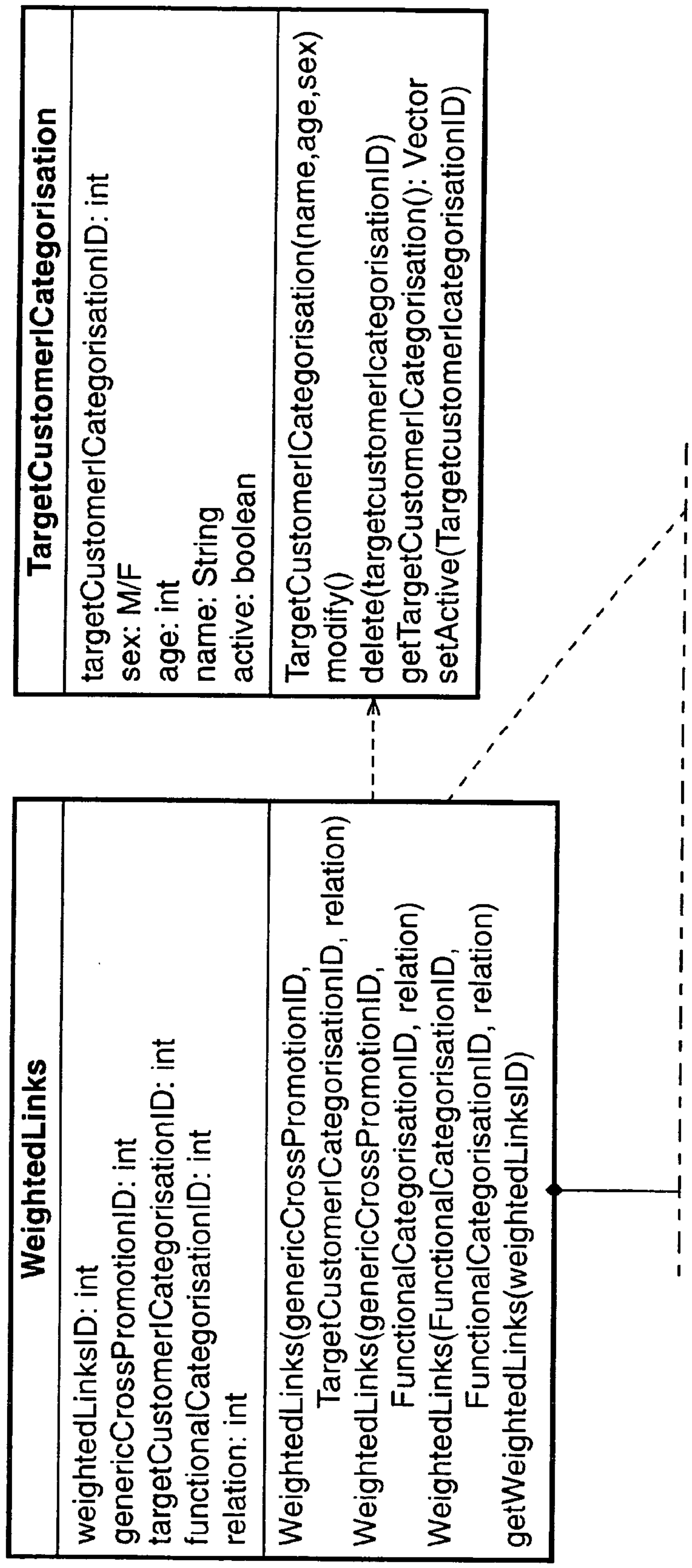
WeightedLinks
weightedLinksID: int
genericCrossPromotionID: int
targetCustomerICategorisationID: int
functionalCategorisationID: int
relation: int
WeightedLinks(genericCrossPromotionID,
TargetCustomerICategorisationID, relation)
WeightedLinks(genericCrossPromotionID,
FunctionalCategorisationID, relation)
WeightedLinks(FunctionalCategorisationID,
FunctionalCategorisationID, relation)
getWeightedLinks(weightedLinksID)
TargetCustomerICategorisation
targetCustomerICategorisationID: int
sex: M/F
age: int
name: String
active: boolean
TargetCustomerICategorisation(name,age,sex)
modify()
delete(targetcustomerIcategorisationID)
getTargetCustomerICategorisation(): Vector
setActive(TargetcustomerIcategorisationID)

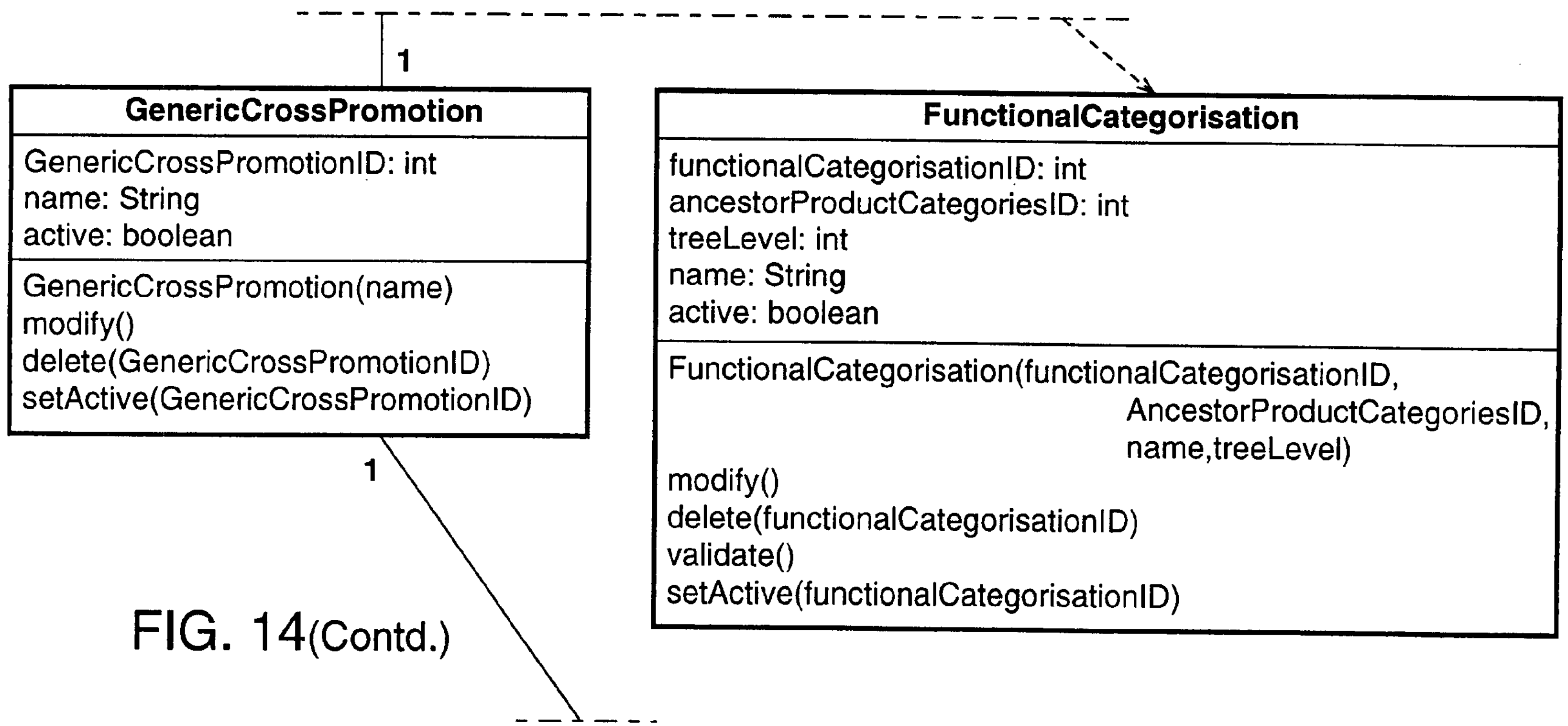
1
GenericCrossPromotion
GenericCrossPromotionID: int
name: String
active: boolean
GenericCrossPromotion(name)
modify()
delete(GenericCrossPromotionID)
setActive(GenericCrossPromotionID)
1
FunctionalCategorisation
functionalCategorisationID: int
ancestorProductCategoriesID: int
treeLevel: int
name: String
active: boolean
FunctionalCategorisation(functionalCategorisationID,
AncestorProductCategoriesID,
name,treeLevel)
modify()
delete(functionalCategorisationID)
validate()
setActive(functionalCategorisationID)

FIG. 14(Contd.)

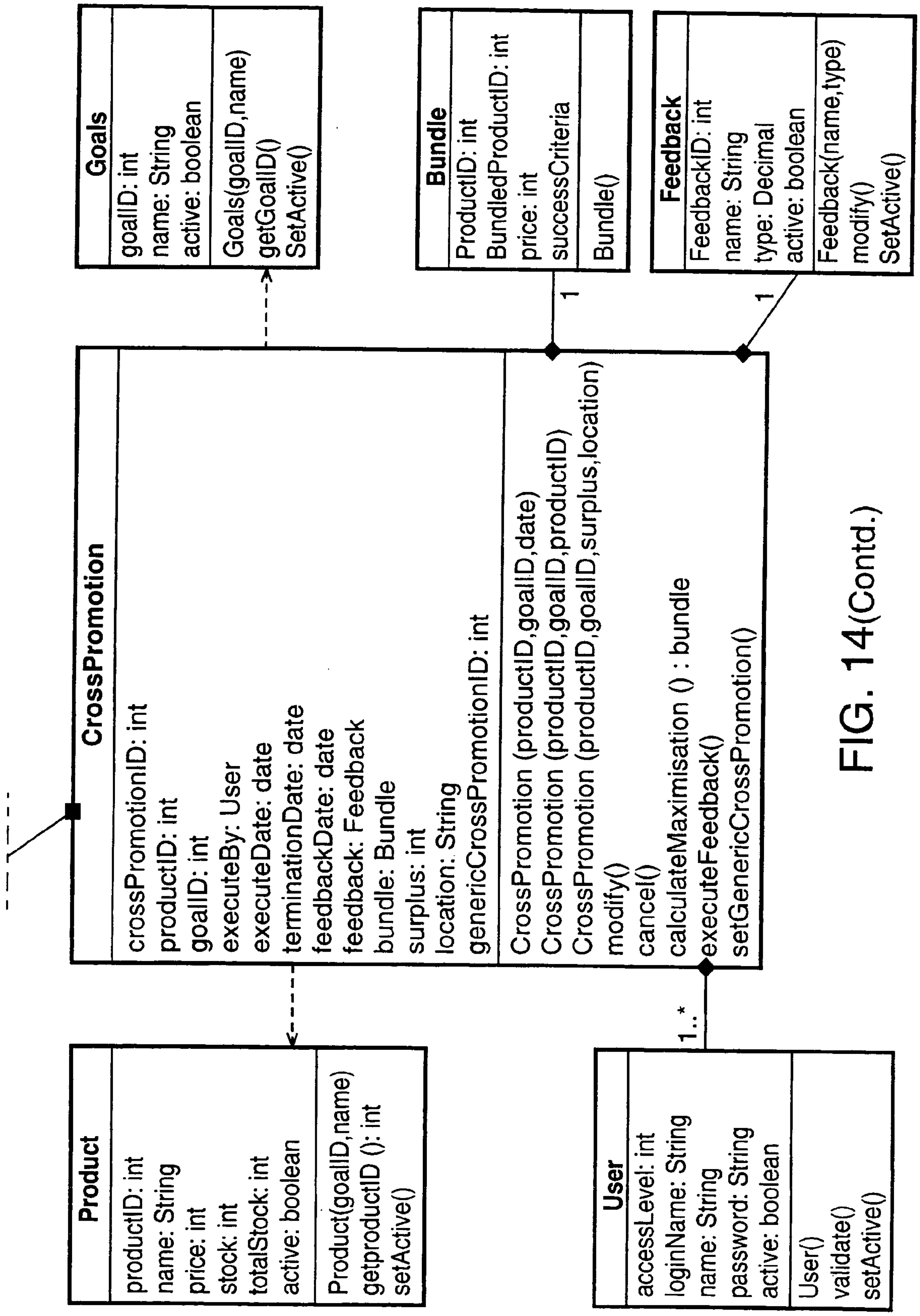
Goals
goalID: int
name: String
active: boolean
Goals(goalID,name)
getGoalID()
SetActive()
Bundle
ProductID: int
BundledProductID: int
price: int
successCriteria
Bundle()
1
Feedback
FeedbackID: int
name: String
type: Decimal
active: boolean
Feedback(name,type)
modify()
SetActive()
1
CrossPromotion
crossPromotionID: int
productID: int
goalID: int
executeBy: User
executeDate: date
terminationDate: date
feedbackDate: date
feedback: Feedback
bundle: Bundle
surplus: int
location: String
genericCrossPromotionID: int
CrossPromotion (productID,goalID,date)
CrossPromotion (productID,goalID,productID)
CrossPromotion (productID,goalID,surplus,location)
modify()
cancel()
calculateMaximisation () : bundle
executeFeedback()
setGenericCrossPromotion()
1..*
Product
productID: int
name: String
price: int
stock: int
totalStock: int
active: boolean
Product(goalID,name)
getproductID (): int
setActive()
User
accessLevel: int
loginName: String
name: String
password: String
active: boolean
User()
validate()
setActive()

FIG. 14(Contd.)

European Patent Office

**DECLARATION**

which under Rule 45 of the European Patent Convention shall be considered, for the purposes of subsequent proceedings, as the European search report

Application Number
EP 03 25 1787

| The Search Division considers that the present application, does not comply with the provisions of the EPC to such an extent that it is not possible to carry out a meaningful search into the state of the art on the basis of all claims | CLASSIFICATION OF THE APPLICATION (Int.Cl.7) |
| --- | --- |
| Reason: | G06F17/60 |

The claims relate to subject matter excluded from patentability under Art. 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC). See also

Guidelines Part B Chapter VIII, 1-6.

The applicant's attention is drawn to the fact that a search may be carried out during examination following a declaration of no search under Rule 45 EPC, should the problems which led to the declaration being issued be overcome (see EPC Guideline C-VI, 8.5).

---

-----

| Place of search | Date | Examiner |
| --- | --- | --- |
| THE HAGUE | 4 July 2003 | Falierou, C |

EPO FORM 1504 (P04C37)